# EUROPÄISCHE PATENTSCHRIFT

(11) **EP 2 206 221 B1**
(45) Veröffentlichungstag und Bekanntmachung des Hinweises auf die Patenterteilung: **09.01.2013**
(21) Anmeldenummer: 08804818.6
(22) Anmeldetag: 26.09.2008
(51) Int. Cl.: H02K 5/14, H01R 39/36, H01R 39/38, H01R 39/40

(54) **BÜRSTENVORRICHTUNG MIT EINER LITZE FÜR EINE ELEKTROMASCHINE**
BRUSH DEVICE HAVING A BRAIDED WIRE FOR AN ELECTRICAL MACHINE
DISPOSITIF À BALAI PRÉSENTANT UN FIL, DESTINÉ À UNE MACHINE ÉLECTRIQUE

(30) Priorität: 24.10.2007 DE 102007051125
(43) Veröffentlichungstag der Anmeldung: 14.07.2010
(73) Patentinhaber: Robert Bosch GmbH, 70442 Stuttgart (DE)
(72) Erfinder: BAYER, Michael, 71636 Ludwigsburg (DE)
(86) Internationale Anmeldenummer: PCT/EP2008/062944
(87) Internationale Veröffentlichungsnummer: WO 2009/053214

(56) Entgegenhaltungen:
- DE-U- 7 035 357
- FR-A- 1 291 731
- US-A- 3 864 803

## Beschreibung

Elektromaschine mit einer Bürstenfassung, mit einer in der Bürstenfassung untergebrachten Bürste, in der eine erste Litze integriert ist, und mit einer Feder, die die Bürste in der Bürstenfassung gegen einen Kommutator vorspannt.

Es sind mechanisch kommutierte Elektromaschinen (E-Maschinen) mit jeweils einer in der Bürste integrierten Litze bekannt. Zum Starten von Verbrennungsmotoren sind mechanisch kommutierte Gleichstrommotoren im Einsatz. Der Strom wird über ein oder mehrerer Bürstenpaare über den Kommutator in die Ankerwicklung eingeleitet. Die Bürsten bestehen meist aus einem Sinterwerkstoff, der hauptsächlich Kupfer- und Graphitanteile hat. Die Bürsten werden aufgrund des hohen Graphitanteils auch Kohlebürsten genannt. Die Kohlebürsten sowie der Kommutator unterliegen im Betrieb einem Verschleiß.

Der Gleichstrommotor, der auch als Starter bezeichnet wird, ist für einen kurzzeitigen Betrieb ausgelegt und gewöhnlich für 30.000 bis 60.000 Schaltzyklen vorgesehen. Die Litze ist in der Bürste in radialer Richtung in Reihe hinter einer Feder angeordnet. Die Bürste wird an den Kommutator angepresst und weist eine beschränkte mögliche Verschleißlänge auf. Die Verschleißlänge erstreckt sich im Seitenquerschnitt gesehen von der Anpressfläche der Bürste an den Kommutator bis zum Beginn des Querschnitts der in der Bürste eingepressten Litze. Eine solche Verschleißlänge ist für einen Einsatz mit höheren Lasten wie für höhere Schaltzyklen und längeren Laufzeiten für eine geforderte bestimmte Lebensdauer nicht ausreichend. Aus dem Stand der Technik sind ferner folgende Bürsten bzw. Bürstenhalter bekannt.

Die DE 23 50 456 A1 beschreibt einen auswechselbaren Bürstenhalter für eine Elektromaschine mit einem Bürstenhalterträger, an dem eine Feder mit einer Kohlebürste befestigt ist. Die Kohlebürste ist nur bis zu einem bestimmten Abnützungsgrad an den Schleifring bzw. Kommutator anpressbar.

US 4,536,670 beschreibt eine elektrische Bürste mit einem eingebauten Bürstenverschleißsensor im Bürstenkörper. Weiterer Stand der Technik ist US 3864803, FR 1291731 und DE 7035357U.

Es ist Aufgabe der Erfindung, eine Bürstenvorrichtung der Eingangs genannten Art derart weiterzubilden, dass eine E-Maschine eine gegenüber dem Stand der Technik erhöhte Schaltzahl und eine längere Laufzeit mit einer verbesserten Lebensdauer aufweist.

Erfindungsgemäß wird die Aufgabe durch den Gegenstand des Patentanspruchs 1 gelöst. Vorteilhafte Weiterbildungen ergeben sich aus den abhängigen Ansprüchen.

Erfindungsgemäß ist in der Bürste eine zweite Litze integriert ausgebildet. Aufgrund der Aufteilung des elektrischen Stroms von einer Litze auf eine weitere zweite Litze kann der Querschnitt der Litzen gesenkt werden, so dass die Verschleißlänge bei gleichem Bauraum vergrößert im Vergleich zu einer in der Bürste unter der Feder angeordneten Litze ist. Diese Verschleißlänge kann bereits eine ausreichende Vergrößerung der Verschleißlänge darstellen, um eine gewünschte Lebensdauer zu erreichen.

Erfindungsgemäß ist die erste und zweite Litze in axialer Richtung vor und hinter der Feder in einem ersten und zweiten Bürstenansatz ausgebildet. Die erste und zweite Litze ist somit parallel vor und hinter der mindestens einen Feder angeordnet.

Dies hat den Vorteil, dass die Verschleißlänge sich dadurch erhöht, dass die Litzen aus der zentralen radialen Richtung entfernt sind, in der die Bürste aufgrund des radialen Kommutators eine geringere Verschleißlänge aufweist.

Gemäß einer die Erfindung weiterbildenden Ausführungsform sind die Dimensionen der ersten und zweiten Litze kleiner als bei einer Bürstenvorrichtung mit einer Litze. Dabei kann der Gesamtquerschnitt aller Litzen in der Bürste bevorzugt größer sein als ein Querschnitt einer einzigen Litze gemäß dem Stand der Technik. Ein größerer Gesamtquerschnitt schafft eine verbesserte Wärmeabfuhr, sowie verbesserte Stromauf bzw. - abnahme bei Stromspitzen und verlängert somit die Lebensdauer.

Vorteilhafterweise kann ein gleicher Querschnitt bei den Litzen zu einer verbesserten Wärmeleitung innerhalb der Bürste, d.h. zu einem homogeneren Wärmefluss, führen.

Um bei einer frühzeitig verschlissenen Bürste die Lebensdauer einer Elektromaschine zu erhöhen, ist vorteilhafterweise die Bürstenvorrichtung auswechselbar ausgebildet.

Gemäß einer weiter bevorzugten Ausführungsform können mehr als eine Feder die Bürste in der Bürstenfassung an den Kommutator anpressen. Dies schafft einen homogeneren Anpressdruck mit einer verbesserten Lebendauer, weil die Federrate C kleiner ausgelegt werden kann.

Bei einem Herstellungsverfahren einer oben beschriebenen Bürstenvorrichtung mit mindestens zwei Litzen in einer Bürste werden mindestens zwei Litzen in der Bürste verpresst. Dies stellt ein einfaches Verfahren dar, um die Lebensdauer einer Bürstenvorrichtung für eine E-Maschine zu erhöhen.

Die Erfindung wird im Folgenden anhand eines Ausführungsbeispiels unter Bezugnahme auf Zeichnungen näher erläutert. Es zeigt:

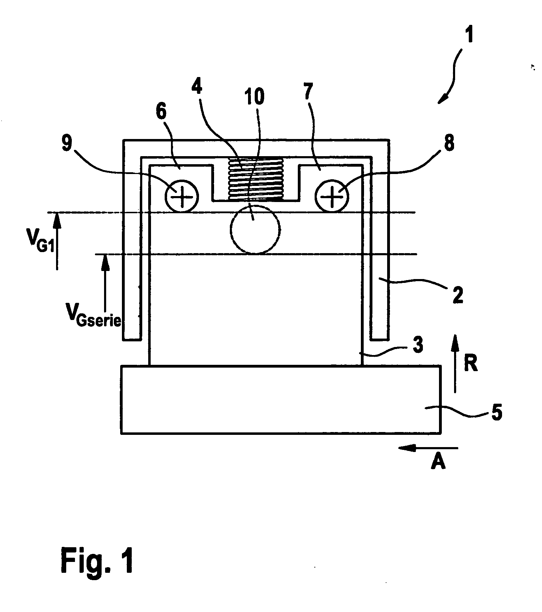

- Fig. 1: eine schematische Seitenansicht einer Bürstenvorrichtung.

Die Fig. 1 zeigt in einer schematischen Seitenansicht eine erfindungsgemäße Bürstenvorrichtung 1 mit einer Bürstenfassung 2, in der eine Bürste 3 untergebracht ist. Die Bürste 3 ist mittels einer Feder 4 gegen den Kommutator 5 vorgespannt und wird gegen diesen angedrückt. Die Bürste 3 besitzt in radialer Richtung R zur Feder 4 parallel angeordnete Bürstenansätze 6, 7, die in Richtung der Achse A vor und hinter der Feder 4 angeordnet sind. In den Bürstenansätzen 6, 7 sind mindestens zwei Litzen, eine erste Litze 8 und eine zweite Litze 9 mit der Bürste 3 verpresst. Die erste und zweite Litze 8, 9 haben einen kleineren Querschnitt als eine einzelne Litze 10 gemäß dem Stand der Technik, die in radialer Richtung seriell unter der Feder 4 in der Bürste 3 angeordnet ist. Die Litze 10 ist in gestrichelter Linie eingezeichnet, da sie den Stand der Technik und nicht die erfindungsgemäße Ausführungsform darstellt. Der Querschnitt der ersten und zweiten Litze 8, 9 ist jedoch zusammen größer als der Querschnitt einer einzelnen Litze 10. Somit wird ein verbesserter homogener Wärmeabfluss erzeugt, wobei gleichzeitig durch die parallele Anordnung der ersten und zweiten Litze 8, 9 zur Feder 4 die Verschleißlänge der Verschleißgrenze V_{GSerie}, die durch eine gestrichelte Linie dargestellt ist, auf die Verschleißgrenze V_{G1} gemäß der Erfindung vergrößert ist. Die Litzen 8, 9 gemäß der Erfindung haben beispielsweise jeweils einen Querschnitt von 2,5 mm², während bei einer herkömmlichen Litze 10 der Querschnitt 4 mm² groß ist. Eine E-Maschine mit einer erfindungsgemäßen Bürstenvorrichtung 1 hat aufgrund der erhöhten Verschleißlänge der Bürsten 3 eine längere Lebensdauer bei längeren Laufzeiten und erhöhten Schaltzyklen.

Alle Figuren zeigen lediglich schematische nicht maßstabsgerechte Darstellungen.

## Patentansprüche

1. Elektromaschine mit einer Bürstenvorrichtung (1) mit einer Bürstenfassung (2), mit einer in der Bürstenfassung (2) untergebrachten Bürste (3), in der eine erste Litze (8) und eine zweite Litze (9) integriert ist, und mit einer Feder (4), die Bürste (3) in der Bürstenfassung (2) gegen einen Kommutator (5) vorspannt, **dadurch gekennzeichnet, dass** die esrte Litze (8) und die zweite Litze (9) in axialer Richtung (A) vor und hinter der Feder (4) in einem ersten und einem zweiten Bürstenansatz (6, 7) so verpresst sind, dass eine Längsrichtung der ersten und der zweiten Litze (8, 9) quer zur radialen Richtung (R) orientiert ist.

2. Elektromaschine mit einer Bürstenvorrichtung (1) nach dem vorhergehenden Anspruch, **dadurch gekennzeichnet, dass** die Dimensionen, insbesondere die Durchmesserstärke, der ersten und zweiten Litze (8, 9) kleiner sind als in einer Bürstenvorrichtung (1) mit einer einzigen Litze.

3. Elektromaschine mit einer Bürstenvorrichtung (1) nach einem oder mehreren der vorhergehenden Ansprüche, **dadurch gekennzeichnet, dass** die Bürstenvorrichtung (1) auswechselbar ist.

4. Elektromaschine mit einer Bürstenvorrichtung (1) nach einem oder mehreren der vorhergehenden Ansprüche, **dadurch gekennzeichnet dass,** mindestens eine zweite Feder (4) die Bürste (3) gegen den Kommutator (5) vorspannt.

5. Elektromaschine mit einer Bürstenvorrichtung (1) nach einem oder mehreren der vorhergehenden Ansprüche, **dadurch gekennzeichnet dass**, die Litzen (8, 9) den gleichen Querschnitt aufweisen.

## Claims

1. Electrical machine having a brush apparatus (1) with a brush holder (2), having a brush (3) which is accommodated in the brush holder (2) and in which a first braided wire (8) and a second braided wire (9) are integrated, and having a spring (4) which prestresses the brush (3) in the brush holder (2) against a commutator (5), **characterized in that** the first braided wire (8) and the second braided wire (9) are pressed in the axial direction (A) in front of and behind the spring (4) in a first and a second brush attachment (6, 7) such that a longitudinal direction of the first and of the second braided wire (8, 9) is oriented transverse to the radial direction (R).

2. Electrical machine having a brush apparatus (1) according to the preceding claim, **characterized in that** the dimensions, in particular the diameter, of the first and of the second braided wire (8, 9) are smaller than in a brush apparatus (1) with a single braided wire.

3. Electrical machine having a brush apparatus (1) according to one or both of the preceding claims, **characterized in that** the brush apparatus (1) can be exchanged.

4. Electrical machine having a brush apparatus (1) according to one or more of the preceding claims, **characterized in that** at least a second spring (4) prestresses the brush (3) against the commutator (5).

5. Electrical machine having a brush apparatus (1) according to one or more of the preceding claims, **characterized in that** the braided wires (8, 9) have the same cross section.

## Revendications

1. Machine électrique comprenant un dispositif à balai (1) comprenant une monture de balai (2), un balai (3) monté dans la monture de balai (3), dans lequel sont intégrés un premier fil (8) et un deuxième fil (9), et un ressort (4) qui précontraint le balai (3) dans la monture de balai (2) contre un collecteur (5), **caractérisée en ce que** le premier fil (8) et le deuxième fil (9) sont pressés dans la direction axiale (A) devant et derrière le ressort (4) dans un premier et un deuxième jeu de balais (6, 7) de telle sorte qu'une direction longitudinale du premier et du deuxième fil (8, 9) soit orientée transversalement à la direction radiale (R).

2. Machine électrique comprenant un dispositif à balai (1) selon la revendication précédente, **caractérisée en ce que** les dimensions, notamment le diamètre d'épaisseur du premier et du deuxième fil (8, 9), sont inférieures à celles dans un dispositif à balai (1) avec un seul fil.

3. Machine électrique comprenant un dispositif à balai (1) selon l'une quelconque ou plusieurs des revendications précédentes, **caractérisée en ce que** le dispositif à balai (1) est remplaçable.

4. Machine électrique comprenant un dispositif à balai (1) selon l'une quelconque ou plusieurs des revendications précédentes, **caractérisée en ce qu**'au moins un deuxième ressort (4) précontraint le balai (3) contre le collecteur (5).

5. Machine électrique comprenant un dispositif à balai (1) selon l'une quelconque ou plusieurs des revendications précédentes, **caractérisée en ce que** les fils (8, 9) présentent la même section transversale.
